# EUROPEAN PATENT SPECIFICATION

(11) **EP 0 888 505 B1**
(45) Date of publication and mention of the grant of the patent: **08.01.2003**
(21) Application number: 97908381.3
(22) Date of filing: 20.03.1997
(51) Int. Cl.: F16J 15/02

(54) **GEL SEALING ARTICLES**
GEL-DICHTUNG
ARTICLES D'ETANCHEITE PORTANT UN GEL

(30) Priority: 21.03.1996 GB 9605927; 15.08.1996 WO PCT/GB96/02000; 18.02.1997 GB 9703380
(43) Date of publication of application: 07.01.1999
(73) Proprietor: Tyco Electronics UK Limited, Swindon, Wiltshire SN3 5HH (GB)
(72) Inventor: HAMMOND, Philip, James, Wootton Bassett, Wiltshire SN4 8BJ (GB); PERCY, Michael, John, Cricklade, Wiltshire SN6 6LS (GB); BLUCK, David, Swindon, Wiltshire SN3 2QW (GB)
(74) Representative: Jay, Anthony William
(86) International application number: GB9700775
(87) International publication number: WO97035127

(56) References cited:
- EP-A- 0 275 171
- WO-A-94/05935
- WO-A-96/09483
- PATENT ABSTRACTS OF JAPAN vol. 8, no. 26 (M-273), 3 March 1984 & JP 58 184361 A (NISSAN), 27 October 1983,

## Description

This invention relates to elongate gel-carrying articles (hereinafter "gel profiles") of various cross-sectional shapes, which may be useful in a wide variety of circumstances for sealing against and/or between surfaces. For avoidance of doubt, it is hereby confirmed that the claims to all articles of this invention relate to free-standing articles carrying the gel and are intended to exclude elongate components such as wires in a gel-containing cable or other assembly. Such components are in contact with the gel only as a result of being in that assembly and are therefore not free-standing gel profiles.

Our co-pending British Patent Application No. 9605927.4 filed on 21 March 1996 and International Application No. PCT/GB96/02000 filed on 15 August 1996 (RK533), from which the present application claims priority, describe profiles comprising an elongate filamentary carrier, one form of which carrier may be a multi-filament yarn, carrying an elongate body of gel which encloses at least 50%, preferably more than 75%, more preferably substantially all, of the perimeter of the carrier as viewed in transverse cross-section. The present invention is concerned with a specific form of carrier which has unexpectedly been found to provide greatly improved processing and appearance of the finished profiles.

Prior art EP-A-0 275 171 discloses an article according to the preamble of claim 1 but in which the core is essentially made of electrically conductive material, thus of metall.

The invention accordingly provides an article comprising a multi-filament yarn carrier carrying an elongate body of gel which encloses more than 50%, preferably more than 75%, more preferably substantially all, of the perimeter of the carrier as viewed in transverse cross-section, wherein the carrier is composed of synthetic polymeric material.

The carrier may comprise continuous filaments or one or more spun staple fibre yarns. One form of such carriers is the synthetic knitting yarn commonly known as "baby wool", a sample of which led to the present invention after being serendipitously (and indeed surreptitiously) extracted from the sewing box of the daughter of one of the inventors. The baby wool carrier comprises polyacrylonitrile and polyamide (preferably a nylon) spun from a co-mingled blend of polyacrylonitrile staple fibres and polyamide staple fibres.

Trial of this small sample unexpectedly produced such a dramatic improvement in the processing and appearance of the resulting profile that further investigation was clearly warranted. This subsequently indicated a preferred form of the carriers for industrial manufacture of profiles according to the present invention comprising multi-filament polyester, preferably polyethylene terephthalate (PET), yarn in which the filaments are continuous.

Without limiting the invention to any specific theory, it is mentioned that the improved results of using the synthetic multi-filament carriers may be at least partly due to their relatively low retained surface moisture under ambient conditions. This may be less than 4%, preferably less than 3%, more preferably less than 2%, especially less than 1%, by weight, for example as determined by test method RAM10077. When gels are extruded thereon at temperatures typically in the range of 220-230°C, the carriers of the present invention tend easily to receive uniform, homogeneous gel coatings, which are especially visually attractive when clear gels are used.

For such melt-coated profiles, it is preferred to use carriers made of materials whose softening temperatures are above the gel coating temperature. Thus, for gels applied at the above temperatures, fibres of polypropylene or polyacrylics or polyacrylonitriles (e.g. Dralon Trade Mark) alone , or in mixtures with softening-resistant fibres (e.g. wool) in too low proportions (e.g. 5% wool by weight), may have desirably low moisture content, but insufficiently high softening temperatures leading to unacceptable weakness and elongation during the coating process. These materials may, however, be useful with gels which are applicable at lower temperatures. The aforementioned baby wool survives the hotter extrusion process thanks to the presence of a sufficient proportion (e.g. 40-60% by weight) of the nylon staple fibres, which have higher softening temperatures. The preferred yarns of polyester filaments, for example PET available under the Trade Marks Dialen 178T or Texply 7/167, also have sufficiently high softening temperatures to survive satisfactorily. Under subsequent conditions of use, the carrier in the finished profile will preferably have an elongation to break less than 10%, more preferably not more than 5%, especially from 1 to 5%.

It will be understood that the filamentary carrier of these free-standing profiles will often be a relatively narrow yarn, preferably of diameter less than 3 mm, more preferably less than 2 mm or less than 1 mm. However, thicker carriers, for example of diameter 4 or 5 mm or more, may also be useful, as may be flexible carriers of this diameter made up of multiples of thinner carriers. The profiles are generally preferred to be flexible and may be provided in coil or roll form from which the profile can be progressively unwound. In such coils or rolls, the gel of the profiles in each succeeding layer may be in direct contact with that of the underlying layer, or a low-adhesion release sheet or other barrier may be incorporated between the layers of gel profile.

Reference to the view of the carrier in transverse cross-section means that the gel encloses the stated proportions of the perimeter of the carrier as viewed from an end of the article looking along its longitudinal axis. The perimeter enclosed by the gel is thus the perimeter of the cross-section. Substantially complete enclosure of that perimeter of the carrier by the gel is advantageous for many purposes, and may obviate the need for the gel to adhere, or at least to adhere strongly, to the carrier, since the cohesive strength of the gel surrounding the carrier may be sufficient to retain it in on the carrier without such adhesion. For other purposes, however, partial enclosure of the carrier by the gel may be preferable. The filamentary nature of the carrier enables the gel to establish a physical grip on the carrier, to some extent independently of its level of adhesion to the yarn material itself.

The cross-sectional shape of the carrier and that of the gel are not critical for the purposes of this invention. Square, triangular or other shapes, or even irregular shapes, may be used for the carrier and/or the gel if desired or necessary, but substantially oval or round cross-sectional shapes are preferable for the carrier and will often be preferable for the body of gel. Whatever the shape, it will usually be preferable for the cross-sectional shape of the body of gel to be substantially uniform along the article, which may thus resemble a string or cord or flexible rod having an outer surface of gel. It is also usually preferable for the thickness of the body of gel to be substantially uniform around the carrier, thus forming a layer of gel which conforms to the exterior shape of the carrier.

The gel may be applied to the carrier by any convenient method, and preferred articles according to this invention are those wherein the body of gel has been melt-coated onto the carrier, preferably by pressure-extrusion for greater physical grip as aforesaid using equipment and conditions known per se. For example, the invention includes a method of making an article according to the invention, wherein the gel is extruded around the said yarn by means of an extruder head having a hollow pin through which the yarn passes, optionally with a vacuum bleed on the extruder to reduce air entrainment in the yarn as it passes through the extruder pin to meet the gel being extruded by the head. In all aspects of this invention, the gel may be cross-linked after placement on the carrier, although thermoplastic gels on the carrier may be preferable for many purposes.

Articles according to this invention may be useful, for example, for winding around other objects to provide a gel surface thereon, or for laying along surfaces of articles or in channels formed in articles to provide a gel sealant on or in those articles for sealing against other surfaces with which the articles will be in contact in use. The articles of this invention may be overbraided with metal filaments to provide electrically-conductive profiles for EMI shielding purposes, the gel squeezing through apertures in the metal overbraid (or similar apertured structure) when the profile is compressed between surfaces in use as a shielding gasket.

Especially preferred articles according to the various aspects of this invention are those wherein the gel comprises a thermoplastic multi-block, preferably penta-block or more preferably triblock, copolymer having a fluid-extended elastomeric mid-block and having end blocks (preferably polystyrene and/or polymethacrylate end blocks) which are substantially impervious to the extender liquid of the mid-block.

The triblock copolymer gels will preferably have the characteristics and meet the criteria described in any or all of EP-A-0426658 (RK308), WO-A-9305113 (RK451), WO-A-9323472 (RK469), and WO-A-9418273 (RK472), the disclosures of all of which are incorporated herein by reference. Those disclosures deal mainly or wholly with triblocks having polystyrene end blocks. For higher temperature performance, it may be preferable to use the new triblock or penta-block gels having polyalkylmethacrylate end blocks described in WO-A-9700292 (RK509), the disclosure of which is incorporated herein by reference.

In a further aspect of the present invention, the carrier of the profile is a braid, knit, weave, or other fabric-like assembly of the said yarns. These forms of article may again be made by extrusion or moulding techniques similar to those referred to above.

In all aspects of the present invention, the gels may include additives such as cross-linking agents. Fillers and additives may also be used to increase the electrical and/or thermal conductivity of the gels, or to enhance the noise or vibration-absorbing qualities of the gels. Flame retardants, pigments, dyes, and other additives may also be used as desired, if compatible with the desired end-use properties of the gels. The gel surface may be selectively cross-linked, preferably using known cross-linking additives and/or initiators and/or heat and/or UV or electron beam radiation, to form a skin on desired parts of the gel bodies, either to reduce surface adhesion, or to enhance the strength and/or handleability of the gel bodies, or both.

The profiles of the present invention may be used in ways similar to those described in WO-A-9609483 (RK508) and/or in the aforementioned applications from which the present application claims priority, the disclosures of all of which are incorporated herein by reference.

## Claims

1. An article comprising a multi-filament yarn carrier carrying an elongate body of gel which encloses more than 50%, preferably more than 75%, more preferably substantially all, of the perimeter of the carrier as viewed in transverse cross-section, **characterized in that** the carrier is at least partly composed of synthetic polymeric material.

2. An article according to claim 1, wherein the carrier comprises one or more spun staple fibre yarns.

3. An article according to claim 1 or 2, wherein the synthetic polymeric material of the carrier comprises polyacrylonitrile and polyamide (preferably a nylon).

4. An article according to claim 3, wherein the carrier comprises one or more spun yarns of a co-mingled blend of polyacrylonitrile staple fibres and polyamide staple fibres, the proportion of polyamide preferably being at least 30%, more preferably 40-60%, by weight of the said spun yarn(s).

5. An article according to any preceding claim, wherein the carrier comprises one or more continuous filaments.

6. An article according to any preceding claim, wherein the carrier comprises polyester, preferably polyethylene terephthalate.

7. An article according to any preceding claim, wherein the gel, at least as initially applied to the carrier, is thermoplastic.

8. An article according to claim 7, wherein the gel has been melt-coated, preferably pressure-extruded, around the carrier at a gel temperature less than the softening temperature of at least a component of the carrier present in a proportion of 30% or more by weight.

9. An article according to any preceding claim, wherein the gel has been cross-linked after placement on the carrier.

10. An article according to any preceding claim, wherein the gel comprises a thermoplastic triblock or multiblock copolymer having a fluid-extended elastomeric mid-block and having end blocks (preferably polystyrene and/or polymethacrylate end blocks) which are substantially impervious to the extender liquid of the mid-block.

11. An article according to any preceding claim, wherein the cross-sectional shape of the body of gel is substantially uniform along the article and/or the thickness of the body of gel is substantially uniform around the carrier.

12. An article according to any preceding claim, wherein the carrier is a braid, knit, weave or other fabric-like assembly of the said yarn.

13. An article according to any preceding claim, wherein the said yarn immediately before application of the gel thereto has a moisture content less than 4%, preferably less than 3%, more preferably less than 2%, especially less than 1%, by weight.

14. An article according to any preceding claim, wherein the said yarn in the article has an elongation to break less than 10%, preferably not more than than 5%, more preferably in the range from 1 to 5 percent.

15. A method of making an article according to any preceding claim, wherein the gel is extruded around the said yarn by means of an extruder head having a hollow pin through which the yarn passes, optionally with a vacuum bleed on the extruder to reduce air entrainment in the yarn as it passes through the extruder pin to meet the gel being extruded by the head.

16. An article according to any of claims 1 to 14, which has been enclosed in a fabric of electrically-conductive or other filaments, preferably a metal filament overbraid.

## Patentansprüche

1. Gegenstand, der einen Multifilamentgarnträger aufweist, der einen langgestreckten Gelkörper trägt, der mehr als 50 %, bevorzugt mehr als 75 %, stärker bevorzugt im wesentlichen den gesamten des Umfang des Trägers, gesehen im Querschnitt in Querrichtung, umschließt, **dadurch gekennzeichnet, daß** der Träger mindestens teilweise aus polymerem Kunststoff besteht.

2. Gegenstand nach Anspruch 1, wobei der Träger ein oder mehrere versponnene Stapelfasergarne aufweist.

3. Gegenstand nach Anspruch 1 oder 2, wobei der polymere Kunststoff des Trägers Polyacrylnitril und Polyamid (bevorzugt ein Nylon) aufweist.

4. Gegenstand nach Anspruch 3, wobei der Träger ein oder mehrere versponnene Garne aus einem mitvermischten Gemisch aus Polyacrylnitril-Stapelfasern und Polyamid-Stapelfasern aufweist, wobei der Anteil von Polyamid bevorzugt mindestens 30 Gew.-%, stärker bevorzugt 40 bis 60 Gew.-% des versponnenen Garns (der versponnenen Garne) beträgt.

5. Gegenstand nach einem der vorhergehenden Ansprüche, wobei der Träger ein oder mehrere Endlosfilamente aufweist.

6. Gegenstand nach einem der vorhergehenden Ansprüche, wobei der Träger Polyester, bevorzugt Polyethylenterephthalat, aufweist.

7. Gegenstand nach einem der vorhergehenden Ansprüche, wobei das Gel, mindestens so, wie es ursprünglich auf den Träger aufgebracht ist, thermoplastisch ist.

8. Gegenstand nach Anspruch 7, wobei das Gel um den Träger herum bei einer Geltemperatur unter der Erweichungstemperatur von mindestens einer Komponente des Trägers, die in einem Anteil von 30 Gew.-% oder mehr anwesend ist, schmelzbeschichtet, bevorzugt druckextrudiert, worden ist.

9. Gegenstand nach einem der vorhergehenden Ansprüche, wobei das Gel nach Anbringung auf dem Träger vernetzt worden ist.

10. Gegenstand nach einem der vorhergehenden Ansprüche, wobei das Gel ein thermoplastisches Triblock- oder Mehrfachblockcopolymer aufweist, das einen fluidverstreckten elastomeren Mittelblock und Endblöcke (bevorzugt Polystyrolund/oder Polymethacrylat-Endblöcke) hat, die für die Streckflüssigkeit des Mittelblocks im wesentlichen undurchlässig sind.

11. Gegenstand nach einem der vorhergehenden Ansprüche, wobei die Querschnittsgestalt des Gelkörpers entlang dem Gegenstand im wesentlichen gleichförmig ist und/oder die Dicke des Gelkörpers um den Träger herum im wesentlichen gleichförmig ist.

12. Gegenstand nach einem der vorhergehenden Ansprüche, wobei der Träger ein Geflecht, eine Maschenware, ein Gewebe oder eine andere Anordnung des Garns von der Art eines textilen Flächengebildes ist.

13. Gegenstand nach einem der vorhergehenden Ansprüche, wobei das Garn unmittelbar vor Aufbringung des Gels darauf einen Feuchtigkeitsgehalt von weniger als 4 Gew.-%, bevorzugt weniger als 3 Gew.-%, stärker bevorzugt weniger als 2 Gew.-%, insbesondere weniger als 1 Gew.-% hat.

14. Gegenstand nach einem der vorhergehenden Ansprüche, wobei das Garn in dem Gegenstand eine Bruchdehnung von weniger als 10 %, bevorzugt nicht mehr als 5 %, stärker bevorzugt im Bereich von 1 bis 5 % hat.

15. Verfahren zum Herstellen eines Gegenstands nach einem der vorhergehenden Ansprüche, wobei das Gel um das Garn herum durch einen Extruderkopf extrudiert wird, der einen Hohlstift hat, durch den das Garn hindurchläuft, fakultativ mit einer Vakuumentlüftung an dem Extruder, um mitgeschleppte Luft in dem Garn zu reduzieren, während dieses durch den Extruderstift hindurchläuft, um mit dem von dem Kopf extrudierten Gel zusammenzutreffen.

16. Gegenstand nach einem der Ansprüche 1 bis 14, das in einem textilen Flächengebilde aus elektrisch leitfähigen oder anderen Filamenten, bevorzugt einem Metallfilament-Übergeflecht, eingeschlossen worden ist.

## Revendications

1. Article comprenant un support à fil(s) multifilament(s), portant un corps allongé d'un gel qui entoure plus de 50 %, avantageusement plus de 75 %, de préférence pratiquement la totalité du périmètre du support de la manière examinée en coupe transversale, **caractérisé en ce que** le support est constitué au moins partiellement d'une matière polymère synthétique.

2. Article suivant la revendication 1, dans lequel le support comprend un ou plusieurs fils filés de fibres discontinues.

3. Article suivant la revendication 1 ou 2, dans lequel la matière polymère synthétique du support comprend un polyacrylonitrile et un polyamide (de préférence un nylon).

4. Article suivant la revendication 3, dans lequel le support comprend un ou plusieurs fils filés d'un mélange formé en mêlant conjointement des fibres discontinues de polyacrylonitrile et des fibres discontinues de polyamide, la proportion de polyamide étant avantageusement d'au moins 30 %, de préférence de 40 à 60 % en poids dudit ou desdits fils filés.

5. Article suivant l'une quelconque des revendications précédentes, dans lequel le support comprend un ou plusieurs filaments continus.

6. Article suivant l'une quelconque des revendications précédentes, dans lequel le support comprend un polyester, de préférence un poly(téréphtalate d'éthylène).

7. Article suivant l'une quelconque des revendications précédentes, dans lequel le gel, au moins tel qu'il a été appliqué initialement au support, est thermoplastique.

8. Article suivant la revendication 7, dans lequel le gel a été appliqué par revêtement en masse fondue, de préférence par extrusion sous pression, autour du support à une température du gel inférieure à la température de ramollissement d'au moins un constituant du support présent en une proportion égale ou supérieure à 30 % en poids.

9. Article suivant l'une quelconque des revendications précédentes, dans lequel le gel a été réticulé après mise en place sur le support.

10. Article suivant l'une quelconque des revendications précédentes, dans lequel le gel comprend un copolymère tri-séquencé ou multi-séquencé thermoplastique comprenant un bloc intermédiaire élastomère étendu avec un fluide et comprenant des blocs terminaux (de préférence des blocs terminaux de polystyrène et/ou polyméthacrylate) qui sont pratiquement imperméables au liquide de dilution du bloc intermédiaire.

11. Article suivant l'une quelconque des revendications précédentes, dans lequel la forme en section transversale du corps de gel est pratiquement uniforme le long de l'article et/ou l'épaisseur du corps de gel est pratiquement uniforme autour du support.

12. Article suivant l'une quelconque des revendications précédentes, dans lequel le support est une tresse, un tricot ou une armure ou un autre assemblage analogue à une étoffe dudit fil.

13. Article suivant l'une quelconque des revendications précédentes, dans lequel le fil, immédiatement avant l'application du gel à ce fil, a une teneur en humidité inférieure à 4 %, avantageusement inférieure à 3 %, de préférence inférieure à 2 %, notamment inférieure à 1 % en poids.

14. Article suivant l'une quelconque des revendications précédentes, dans lequel le fil dans l'article a un allongement à la rupture inférieur à 10 %, avantageusement non supérieur à 5 %, de préférence compris dans l'intervalle de 1 à 5 %.

15. Procédé pour la production d'un article suivant l'une quelconque des revendications précédentes, dans lequel le gel est extrudé autour du fil au moyen d'une tête d'extrudeuse ayant une broche creuse à travers laquelle passe le fil, facultativement en soumettant l'extrudeuse à une mise sous vide pour réduire l'entraînement d'air dans le fil lors de son passage à travers la broche d'extrudeuse pour rencontrer le gel extrudé par la tête.

16. Article suivant l'une quelconque des revendications 1 à 14, qui a été enfermé dans une étoffe de filaments électriquement conducteurs ou d'autres filaments, de préférence dans une tresse de filaments métalliques de recouvrement.
